# EUROPEAN PATENT APPLICATION

(11) **EP 4 790 541 A1**
(43) Date of publication of application: **12.08.2026**
(21) Application number: 23892756.0
(22) Date of filing: 03.10.2023
(51) Int. Cl.: G06F 3/14, H04L 51/04

(54) **NOTIFICATION SYSTEM, NOTIFICATION DEVICE, NOTIFICATION METHOD, AND PROGRAM**

(71) Applicant: PANASONIC INTELLECTUAL PROPERTY MANAGEMENT CO., LTD., Kadoma-shi, Osaka 571-0057 (JP)
(72) Inventor: ASAI, Sara, Osaka 571-0057 (JP); IKEUCHI, Hiromu, Osaka 571-0057 (JP); ISHII, Masahiro, Osaka 571-0057 (JP)
(74) Representative: Novagraaf International SA
(86) International application number: PCT/JP2023/036003
(87) International publication number: WO 2025/074492

(57) **Abstract**

A notification system (100) includes an acquirer (11), an extractor (12), and a processing unit (13). The acquirer (11) acquires text information that includes a message transmitted from an information processing terminal (3). The extractor (12) extracts a condition concerning notification using a message from the text information acquired by the acquirer (11). The processing unit (13) causes notification equipment (2) to output notification information under the condition extracted by the extractor (12), the notification information indicating the content of the message included in the text information.

## Description

### [Technical Field]

The present disclosure relates to a notification system or the like that causes notification equipment to output notification information indicating the contents of a message transmitted from an information processing terminal.

### [Background Art]

For example, Patent Literature (PTL) 1 discloses a technique for causing household equipment having a voice input and output function to utter a message, by indicating to the household equipment the contents and timing of utterance.

### [Citation List]

### [Patent Literature]

[PTL 1]
Japanese Unexamined Patent Application Publication No. 2017-151718

### [Summary of Invention]

### [Technical Problem]

The present disclosure provides a notification system or the like that allows an information processing terminal to control notification from notification equipment with ease.

### [Solution to Problem]

A notification system according to one aspect of the present disclosure includes an acquirer, an extractor, and a processing unit. The acquirer acquires text information that includes a message transmitted from an information processing terminal. The extractor extracts a condition from the text information acquired by the acquirer, the condition concerning notification using the message. The processing unit causes notification equipment to output notification information under the condition extracted by the extractor, the notification information indicating a content of the message included in the text information.

Notification equipment according to another aspect of the present disclosure includes an instruction acquirer and an outputter. The instruction acquirer acquires, from the notification system described above, an instruction to output the notification information. The outputter outputs the notification information when the instruction acquirer acquires the instruction.

A notification method according to another aspect of the present disclosure includes acquiring text information that includes a message transmitted from an information processing terminal, extracting a condition concerning notification using the message from the text information acquired, and causing notification equipment to output notification information under the condition extracted, the notification information indicating a content of the message included in the text information.

A program according to another aspect of the present disclosure causes one or more processors to execute the notification method described above.

### [Advantageous Effects of Invention]

The notification system or the like according to the present disclosure has the advantage of allowing an information processing terminal to control a mode of notification from notification equipment with ease.

### [Brief Description of Drawings]

[FIG. 1]

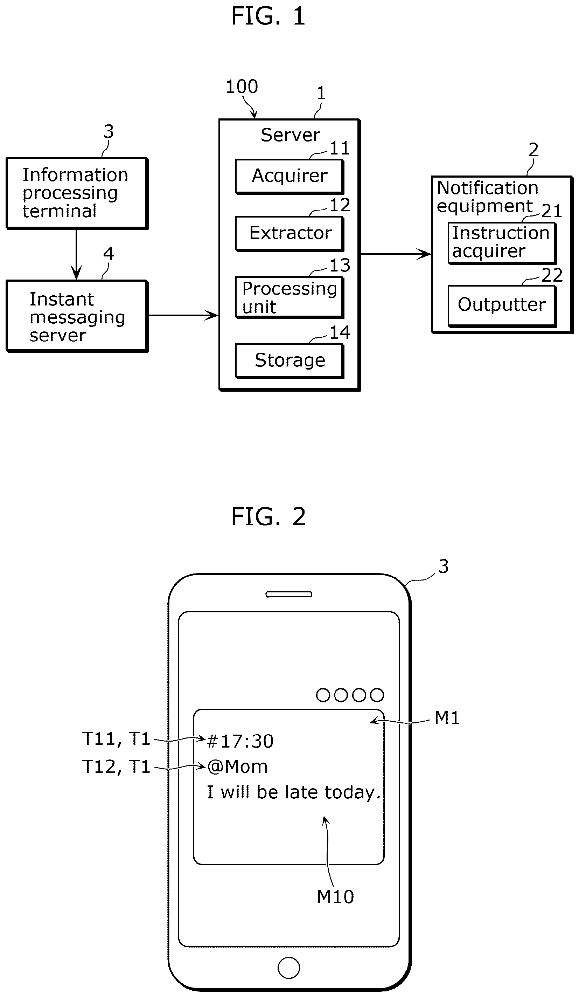

   FIG. 1 is a block diagram showing an overall configuration including a notification system according to an embodiment.
[FIG. 2]
   FIG. 2 is a diagram showing a first example of extraction conducted by the notification system according to the embodiment.
[FIG. 3]

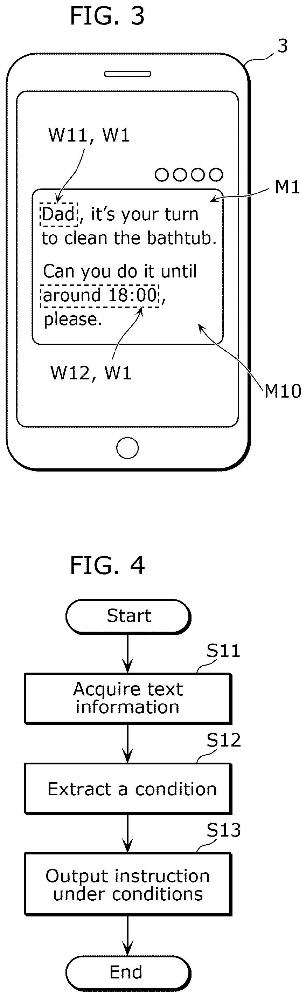

   FIG. 3 is a diagram showing a second example of extraction conducted by the notification system according to the embodiment.
[FIG. 4]
   FIG. 4 is a flowchart showing an example of operations of the notification system according to the embodiment.
[FIG. 5]

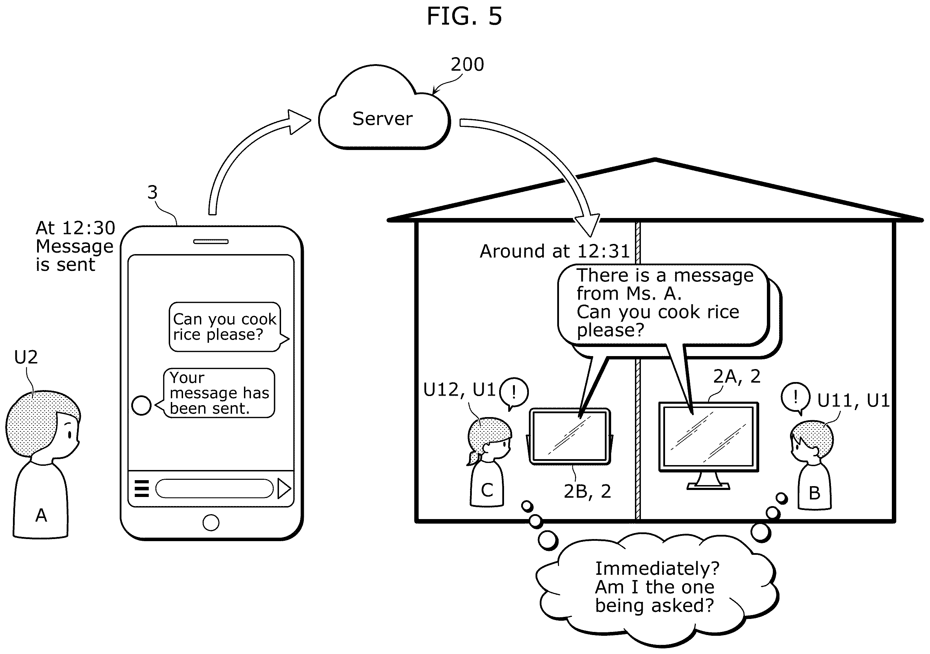

   FIG. 5 is an explanatory drawing illustrating a problem with a notification system according to a comparative example.
[FIG. 6]

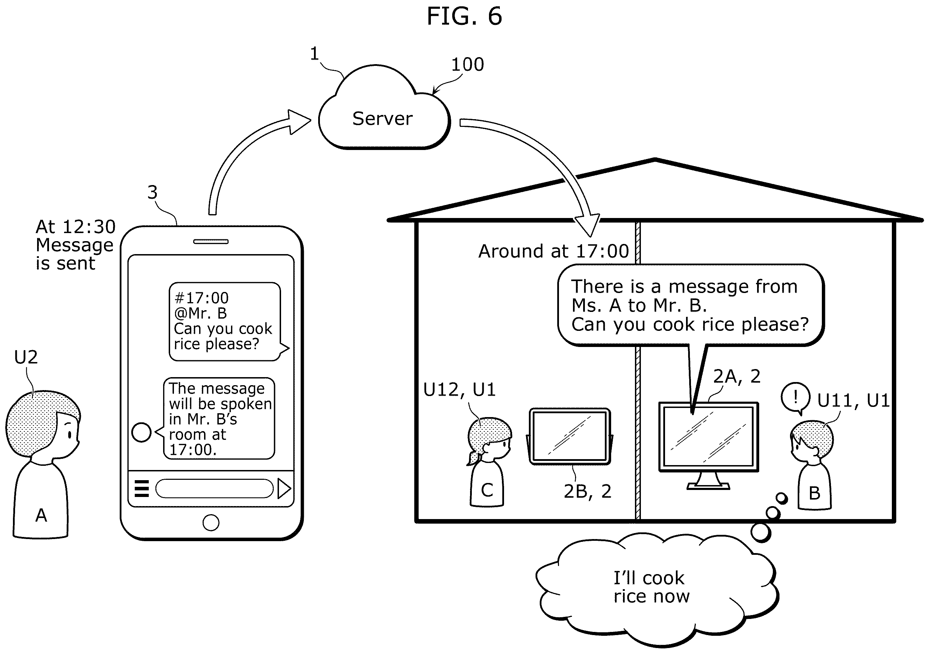

   FIG. 6 is an explanatory drawing illustrating an advantage of the notification system according to the embodiment.
[FIG. 7]

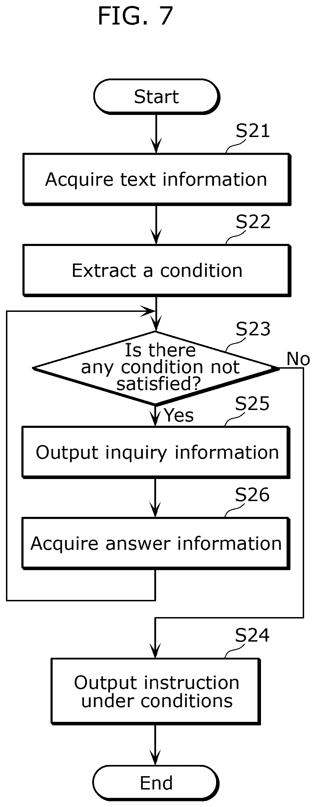

   FIG. 7 is flowchart showing an example of operations of a notification system according to a variation of the embodiment.
[FIG. 8]

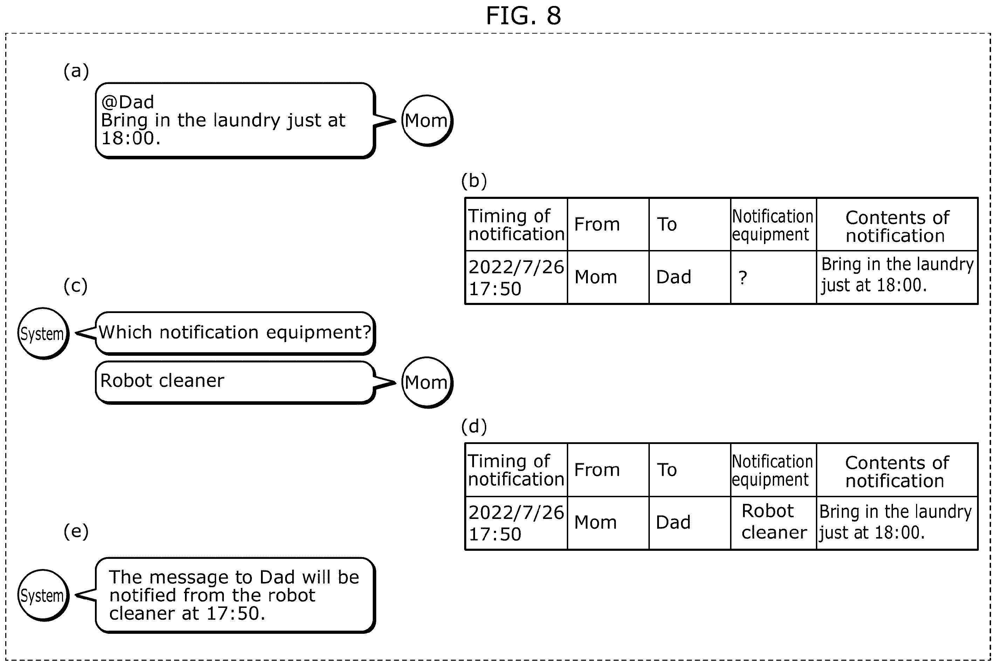

   FIG. 8 is a diagram showing a specific example of operations of the notification system according to the variation of the embodiment.
[FIG. 9]

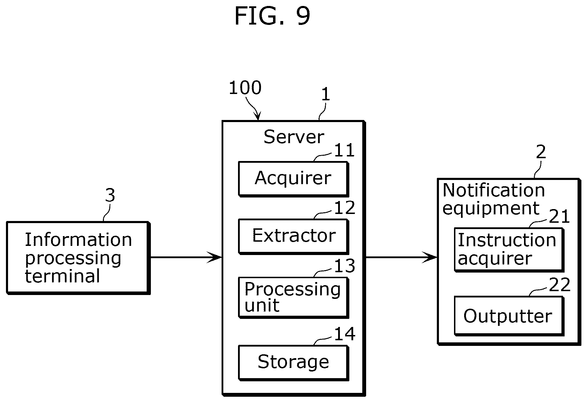

   FIG. 9 is a block diagram showing an overall configuration of a notification system according to another variation of the embodiment.

### [Description of Embodiments]

First, the point of view of the inventors will be described below.

As disclosed in PTL 1, there is conventionally technology for causing household equipment (notification equipment) having a voice input and output function to utter a message, by indicating to the household equipment the contents and timing of utterance (notification). This technology may be used in order to, for example, notify a user who is not beside a home electric appliance such as a washing machine about the contents of an event that has occurred in the home electric appliance, by causing notification equipment having a voice input and output function to utter a message about the contents of the event. Examples of the event may include the occurrence of some sort of error in the home electric appliance and the completion of an operation that has been executed by the home electric appliance.

It is conceivable to use the above-described technology in order to notify a user who is beside the notification equipment having a voice input and output function about the contents of a massage by causing the notification equipment to utter the message, the message having been input via an instant messaging application executed by an information processing terminal such as a smartphone. However, the instant messaging application basically transmits an input message instantaneously to the notification equipment and does not have the function of designating a mode of notification in which the notification equipment notifies the user about the contents of the message. Thus, once having received a signal that includes a message transmitted from an information processing terminal, the notification equipment instantaneously notifies the user about the contents of the message included in the received signal. That is, there is a problem with the above-described technology that an information processing terminal is incapable of controlling the notification from the notification equipment.

The inventors have made the present disclosure in light of the circumstances described above.

Hereinafter, an embodiment will be described in detail with appropriate reference to the drawings. It is, however, noted that detailed description more than necessary may be omitted. For example, detailed description of already well-known matter and redundant description of substantially identical constituent elements may be omitted. This is to avoid unnecessary redundancy of the following description and to facilitate understanding for those skilled in the art.

Note that the inventors provide the accompanying drawings and the following description in order to help those skilled in the art to better understand the present disclosure, and do not intend to limit the subject matter of claims by the accompanying drawings and the following description.

### [Embodiment]

### [1-1. Overall Configuration]

First, an overall configuration including notification system 100 according to an embodiment will be described with reference to FIG. 1. FIG. 1 is a block diagram showing the overall configuration including notification system 100 according to the embodiment. In the embodiment, for example, notification system 100 may be a system for, when message M1 (see FIG. 2 and other drawings described later) is transmitted from information processing terminal 3 such as a smartphone, causing notification equipment 2 to output notification information indicating the contents of message M1.

Notification equipment 2 is equipment that allows user U1 (see FIG. 5 and other drawings described later) who is different from user U2 (see FIG. 5 and other drawings described later) who is holding information processing terminal 3 to be notified about the contents of message M1 transmitted from information processing terminal 3 held by user U2.

In the embodiment, the notification from notification equipment 2 may be implemented by, for example, voice output from a speaker. Note that the notification from notification equipment 2 may also be implemented by, for example, display of character strings, images, or the like on a display provided, or may be implemented by both the display and the voice output.

For example, notification equipment 2 may be stationary equipment provided in a facility inhabited by user U1 and having a voice output function or a display function as described above. In the embodiment, notification equipment 2 is a household appliance. Specifically, examples of notification equipment 2 may include a smart speaker, a television receiver, lighting equipment, a pet camera, an interphone base unit, an interphone slave unit, an air conditioner, and a robot cleaner. Note that notification equipment 2 may also be a portable information equipment held by user U1, such as a transportable television receiver, a smartphone, a tablet terminal, or a lap-top personal computer.

Notification equipment 2 includes instruction acquirer 21 and outputter 22. In the embodiment, notification equipment 2 includes a processor and memory, and each constituent element of notification equipment 2 is realized by the processor executing computer programs stored in the memory.

Instruction acquirer 21 acquires an instruction to output notification information from notification system 100. In the embodiment, for example, instruction acquirer 21 may receive an instruction signal transmitted from notification system 100 via a network such as the Internet (hereinafter, simply referred to as the "network") and acquire an instruction included in the instruction signal.

When instruction acquirer 21 has acquired an instruction, outputter 22 outputs notification information. For example, in the case where notification equipment 2 has a voice output function, outputter 22 may access the uniform resource locator (URL) of a sound source included in the instruction so as to download a voice message and may replay the voice message to output notification information. Alternatively, outputter 22 may replay a voice message included in the instruction. In the case where various voice messages are stored in advance in the memory of notification equipment 2, outputter 22 may read out a corresponding voice message from the memory and replay the read-out voice message in accordance with the instruction. In the case where notification equipment 2 has the function of generating voice automatically, outputter 22 may generate and replay a corresponding voice message in accordance with the instruction.

For example, in the case where notification equipment 2 has a display function, outputter 22 may output notification information by displaying character strings, images, or the like included in the instruction on a display. In the case where various character strings, images, or the like are stored in advance in the memory of notification equipment 2, outputter 22 may read out a corresponding character string, image or the like from the memory and display the read-out character string, image, or the like on the display in accordance with the instruction. In the case where notification equipment 2 has the function of generating character strings, images, or the like automatically, outputter 22 may generate a corresponding character string, image, or the like and display the generated character string, image, or the like on the display in accordance with the instruction.

Information processing terminal 3 is a terminal held by user U2 and, for example, may be a transportable terminal such as a smartphone, a tablet terminal, or a lap-top personal computer. Information processing terminal 3 has the function of transmitting message M1 to other equipment including server 1. In the embodiment, information processing terminal 3 has installed therein an instant messaging application. By executing the instant messaging application, information processing terminal 3 transmits text information to a designated destination, the text information including message M1 that is input via the instant messaging application.

Examples of the instant messaging application include LINE (registered trademark), WhatsApp (registered trademark), WeChat (registered trademark), Messenger (registered trademark), and Snapchat (registered trademark). It goes without saying that the instant messaging application is not limited to the above-described examples.

### [1-2. Notification System]

Next, notification system 100 will be described in detail. As shown in FIG. 1, notification system 100 includes acquirer 11, extractor 12, processing unit 13, and storage 14. Although notification system 100 includes storage 14 in the embodiment, storage 14 does not necessarily have to be a constituent element of notification system 100.

In the embodiment, notification system 100 is realized by server 1. Server 1 includes a processor and memory, and each constituent element of notification system 100 is realized by the processor executing computer programs stored in the memory. In the embodiment, storage 14 serves as the memory.

Notification system 100 is configured to be capable of communicating with notification equipment 2 and information processing terminal 3 via a network. Although one notification equipment 2 and one information processing terminal 3 are shown in the example of FIG. 1, the system may include a plurality of pieces of notification equipment 2 or a plurality of information processing terminals 3.

Acquirer 11 acquires text information that includes message M1 transmitted from information processing terminal 3. In the embodiment, acquirer 11 acquires the text information by receiving a signal that includes message M1 transmitted from information processing terminal 3 via the network by way of instant messaging server 4. Here, instant messaging server 4 is a server operated by a provider of the instant messaging application. More specifically, acquirer 11 acquires the text information that includes message M1 input via the instant messaging application executed by information processing terminal 3. Note that acquirer 11 acquires the text information by receiving a signal transmitted from instant messaging server 4 and destined to server 1 (notification system 100), among signals that include message M1 transmitted from information processing terminal 3.

Extractor 12 extracts a condition concerning notification using message M1 from the text information acquired by acquirer 11. Examples of the condition are listed hereinafter. Note that the conditions listed below are mere examples.

For example, the condition may indicate the timing of output of the notification information from notification equipment 2. Specifically, in the case where the condition indicates 17:00 as the timing of output of the notification information, notification equipment 2 outputs the notification information at the designated time of 17:00. Note that the timing of output of the notification information that can be designated by the condition is not limited to the time of day, but may be the time of day that includes date.

Alternatively, for example, the condition may indicate the type of notification equipment 2 that outputs the notification information. Specifically, in the case where the condition indicates a robot cleaner as notification equipment 2 that outputs the notification information, the designated robot cleaner, i.e., notification equipment 2, outputs the notification information. Note that the type of notification equipment 2 that can be designated by the condition may, for example, be the type of notification equipment 2 that includes place, such as a robot cleaner in the kitchen.

Alternatively, for example, the condition may indicate the receiver of the notification information. Specifically, in the case where the condition indicates the user's father as the receiver of the notification information, notification equipment 2 outputs the notification information that includes words for calling the designated father (e.g., "there is a message to father"). Note that the receiver of the notification information that can be designated by the condition may be designated by, for example, the account name used in the instant messaging application.

Here, processing unit 13 may cause notification equipment 2 relating to the receiver to output the notification information. For example, by referencing data that indicates correspondence between receivers and notification equipment 2, the data being stored in advance in storage 14, processing unit 13 may cause notification equipment 2 used by the receiver or notification equipment 2 present in the room where the receiver is present to output the notification information. Alternatively, for example, by referencing a detection result received from a sensor that has detected identification information about the receiver, processing unit 13 may cause notification equipment 2 present around the receiver to output the notification information.

As another alternative, processing unit 13 may cause notification equipment 2 to output notification information in accordance with parameters set by the receiver. Examples of the parameters may include a speaker, the speed of utterance, the type of notification equipment 2, a sound level, and a time period during which notification is inhibited. The parameters may be set by, for example, the receiver executing an application for notification system 100 and making appropriate input to the application by using the information processing terminal. For example, processing unit 13 may reference parameters set by the receiver, the parameters being stored in advance in storage 14, and cause notification equipment 2 to output the notification information in accordance with the referenced parameters.

Alternatively, for example, the condition may indicate a mode of output of the notification information. Specifically, in the case where the condition indicates the user's mother as a speaker, notification equipment 2 may output the notification information by way of a machine voice imitating the voice of the user's mother. In the case where the condition indicates a relatively slow speed of utterance, notification equipment 2 may output the notification information by uttering a message at a relatively slow speed. In the case where the condition indicates a relatively high sound level of utterance, notification equipment 2 may output the notification information by uttering a message at a relatively high sound level.

In the embodiment, extractor 12 extracts the condition from the text information in accordance with either first or second example of extraction described below. Note that extractor 12 may extract the condition from the text information in accordance with both of the first and second examples of extraction.

FIG. 2 is a diagram showing a first example of extraction conducted by notification system 100 according to the embodiment. FIG. 2 shows an example in which user U2 is inputting message M1 via the instant messaging application by using information processing terminal 3. In the first example of extraction, extractor 12 extracts tag T1 included in message M1 as a condition.

In the example shown in FIG. 2, message M1 includes first tag T11 and second tag T12 serving as tags T1 and main body M10 of the message. First tag T11 includes a hash mark and a character string. Extractor 12 extracts first tag T11 that is input as "#17:30" as a condition that indicates 17:30 as the timing of output of the notification information. Second tag T12 includes an at sign and a character string. Extractor 12 extracts second tag T12 that is input as "@mother" as a condition that indicates the user's mother as the receiver of the notification information.

As described above, extractor 12 may recognize what type of condition is indicated by the character string following a mark or sign, depending on the type of the mark or sign included in tag T1. In the example shown in FIG. 2, when tag T1 includes a hash mark, extractor 12 recognizes that the character string following the hash mark indicates the timing of output of the notification information from notification equipment 2. When tag T1 includes an at sign, extractor 12 recognizes that the character string following the at sign indicates the receiver of the notification information. It goes without saying that the mark or sign included in tag T1 is not limited to a hash mark or an at sign, and may be any other mark or sign.

Note that, instead of using a plurality of types of marks or signs, only one type of mark or sign may be used in tag T1. In this case, extractor 12 may recognize the character string following the mark or sign for each word and recognize what type of condition is indicated by each word. For example, a case is assumed in which user U2 has input message M1 that includes tag T1 saying "#17:30, robot cleaner, mother" via the instant messaging application by using information processing terminal 3. In this case, extractor 12 may extract tag T1 as a condition that indicates 17:30 as the timing of output of the notification information, a condition that indicates a robot cleaner as notification equipment 2 that outputs the notification information, and a condition that indicates the user's mother as the receiver of the notification information.

FIG. 3 is a diagram showing a second example of extraction conducted by notification system 100 according to the embodiment. Like FIG. 2, FIG. 3 shows an example in which user U2 is inputting message M1 via the instant messaging application by using information processing terminal 3. Note that frames with broken lines in FIG. 3 are merely used for description and in actuality not displayed on the display of information processing terminal 3.

In the second example of extraction, extractor 12 parses message M1 and extracts a condition from the result of parsing. For example, extractor 12 may parse message M1 in accordance with an appropriate parsing algorithm and extract one or more keywords W1 included in message M1 as conditions. Note that extractor 12 may use a trained model that has undergone machine learning so as to output one or more keywords W1 from message M1 serving as an input.

In the example shown in FIG. 3, message M1 includes only main body M10 of the message. By parsing main body M10 of the message, extractor 12 extracts first keyword W11 saying "Dad" as a condition that indicates the user's father as the receiver of the notification information. By parsing main body M10 of the message, extractor 12 also extracts second keyword W12 saying "around 18:00" as a condition that indicates "around 18:00" (e.g., 17:50) as the timing of output of the notification information. In this case, as described previously, processing unit 13 may cause notification equipment 2 relating to the user's father who serves as the receiver (e.g., notification equipment 2 present in the father's room) to output the notification information. Also, in this case, as described previously, processing unit 13 may cause notification equipment 2 to output notification information in accordance with parameters (e.g., the speed of utterance) set by the user's father who serves as the receiver.

As another example, for example, a case is assumed in which user U2 has input message M1 that includes main body M10 of the message saying "Grandpa, I'll leave the medicine I bought on the table" via the instant messaging application by using information processing terminal 3. In this case, by parsing main body M10 of the message, extractor 12 extracts keyword W1 saying "Grandpa" as a condition that indicates the user's grandfather as the receiver of the notification information. In this case, as described previously, processing unit 13 may cause notification equipment 2 relating to the user's grandfather who serves as the receiver (e.g., notification equipment 2 present in the grandfather's room) to output the notification information. Also, in this case, as described previously, processing unit 13 may cause notification equipment 2 to output notification information in accordance with parameters (e.g., the speed of utterance) set by the user's grandfather who serves as the receiver.

On the basis of the condition(s) extracted by extractor 12, processing unit 13 causes notification equipment 2 to output the notification information that indicates the contents of message M1 included in the text information. In the embodiment, processing unit 13 transmits an instruction signal to notification equipment 2 via the network to cause notification equipment 2 to output the notification information. In the embodiment, processing unit 13 includes the URL of a sound source in the instruction signal and transmits this instruction signal to notification equipment 2. The URL of the sound source refers to a URL that can be accessed to download a voice message. That is, outputting the instruction to notification equipment 2 in the embodiment corresponds to transmitting the URL of the sound source.

Specifically, processing unit 13 causes a voice synthetic system (not shown) to generate a voice message indicating the contents of a specified event and stores the generated voice message and the URL of the sound source associated with the voice message in a notification database (not shown). When the character string indicating the contents of notification and the parameter for the sound source to be used have been received from notification system 100 via the network, the voice synthetic system synthesizes voice by using the character string and the parameter acquired to generate a voice message. The notification database serves as a storage for storing various voice messages transmitted from notification system 100 via the network in association with the URLs of sound sources. The notification database may be realized by, for example, semiconductor memory, but there are no particular limitations on the notification database, and the notification database may be known electronic intelligence storage means.

Then, processing unit 13 transmits the URL of the sound source to notification equipment 2 via the network so as to output an instruction to output the voice message to notification equipment 2. In the case where the notification database includes an existing voice message, processing unit 13 may read out the URL of the sound source corresponding to the voice message from the notification database and transmits the read-out URL of the sound source to notification equipment 2 without causing the voice synthetic system to generate the voice message.

For example, processing unit 13 may include the voice message in the instruction signal and transmit this instruction signal to notification equipment 2. For example, in the case where various voice messages are stored in advance in the memory of notification equipment 2 or in the case where notification equipment 2 has the function of generating a voice message automatically, processing unit 13 may include an instruction to designate a voice message to be replayed by notification equipment 2 in the instruction signal and transmit this instruction signal to notification equipment 2.

Storage 14 is a storage device that stores information (e.g., computer programs) that is necessary for the processor of notification system 100 to perform various types of control. Storage 14 may be realized by, for example, semiconductor memory, but there are no particular limitations on storage 14, and storage 14 any be any other known electronic intelligence storage. For example, storage 14 may store data indicating correspondence between the aforementioned receiver and notification equipment 2 and parameters set by the receiver. Storage 14 may further store, for example, instruction data included in the instruction signal transmitted to notification equipment 2.

### [2. Operations]

Operations of notification system 100 according to the embodiment (i.e., a notification method) will be described hereinafter with reference to FIG. 4. FIG. 4 is a flowchart showing an example of the operations of notification system 100 according to the embodiment.

For example, when user U2 has input message M1 addressed to server 1 (notification system 100) via instant messaging application by using information processing terminal 3, information processing terminal 3 transmits text information including message M1 to instant messaging server 4 via the network. Upon receiving the text information, instant messaging server 4 transmits the text information to server 1 via the network. In this way, acquirer 11 acquires the text information that is transmitted from information processing terminal 3 via the network by way of instant messaging server 4 (S11).

Next, extractor 12 extracts a condition concerning notification using message M1, from the text information acquired by acquirer 11 (S12). For example, extractor 12 may extract tag T1 included in message M1 as a condition in accordance with the first example of extraction. Alternatively, for example, extractor 12 may parse message M1 and extract a condition from the result of parsing in accordance with the second example of extraction.

Then, processing unit 13 transmits an instruction signal including an instruction to notification equipment 2 via the network under the condition extracted by extractor 12, i.e., output the instruction (S13). Upon receiving the instruction signal, notification equipment 2 outputs notification information in accordance with the instruction included in the instruction signal.

### [3. Advantages]

The following description is given of advantages of notification system 100 (notification method) according to the embodiment. FIG. 5 is an explanatory drawing illustrating a problem with notification system 200 according to a comparative example. In FIG. 5, first user U11 and second user U12 are both users U1 who are different from user U2 who is holding information processing terminal 3. Hereinafter, user U2 is referred to as "Ms. A", first user U11 as "Mr. B", and second user U12 as "Ms. C". It is assumed in FIG. 5 that Ms. A is out and Mr. B and Ms. C are at home. In FIG. 5, Mr. B and Ms. C are in different rooms. It is also assumed in FIG. 5 that first notification equipment 2A (in the present example, a television receiver) serving as notification equipment 2 is provided in the room where Mr. B is present, and second notification equipment 2B (in the present example, a transportable television receiver) serving as notification equipment 2 is provided in the room where Ms. C is present. Instant messaging server 4 is not shown in FIG. 5. The above-described assumption also applies to FIG. 6 described later.

Notification system 200 according to the comparative example is different from notification system 100 according to the embodiment in that it causes every notification equipment 2 to output notification information instantaneously without extracting conditions, upon acquiring text information that includes message M1 transmitted from information processing terminal 3.

For example, as shown in FIG. 5, a case is assumed in which Ms. A has input message M1 saying "Can you cook rice please?" at 12:30 via the instant messaging application by using information processing terminal 3. In this case, upon acquiring the text information including message M1, notification system 200 according to the comparative example causes every notification equipment 2 (in the present example, first notification equipment 2A and second notification equipment 2B) to instantaneously output notification information indicating the contents of message M1. Here, both of first notification equipment 2A and second notification equipment 2B output a voice message saying "There is a message from Ms. A. Can you cook rice please?" as the notification information at around 12:31.

Then, Mr. B who heard the voice message output from first notification equipment 2A and Ms. C who heard the voice message output from second notification equipment 2B are both unable to determine whether he or she is the one being asked and also unable to determine when to cook rice. As described above, because notification system 200 according to the comparative example has a problem of being incapable of allowing information processing terminal 3 to control notification from notification equipment 2, it is not possible to designate conditions such as the timing of output of the notification information or the receiver of the notification information when causing notification equipment 2 to output the notification information.

In contrast, notification system 100 (notification method) according to the embodiment, upon acquiring the text information including message M1 transmitted from information processing terminal 3, extracts conditions concerning notification using message M1 from the acquired text information and causes notification equipment 2 to output notification information under the extracted conditions. Thus, if message M1 is created to include such conditions, notification system 100 is capable of designating the mode of notification in which the notification information is output by using information processing terminal 3. This brings about the advantage of allowing information processing terminal 3 to control the notification from notification equipment 2 with ease.

Because notification system 100 extracts conditions from the text information transmitted from information processing terminal 3, there is no need to add a new function such as designating conditions to the instant messaging application executed by information processing terminal 3. This brings about the advantage of eliminating the need to update the instant messaging application.

FIG. 6 is an explanatory drawing illustrating the advantages of notification system 100 (notification method) according to the embodiment. For example, as shown in FIG. 6, a case is assumed in which Ms. A has input message M1 saying "#17:00, @Mr. B, Can you cook rice please?" via the instant messaging application at 12:30. by using information processing terminal 3. In this case, upon acquiring the text information including message M1, notification system 100 extracts a condition that indicates "17:00" as the timing of output of the notification information, and a condition that indicates "Mr. B" as the receiver of the notification information.

Note that notification system 100 returns a response message indicating that notification information is to be output from notification equipment 2 under the extracted conditions (in the preset example, a massage saying "The message will be spoken in Mr. B's room at 17:00") via the instant messaging application. Whether notification system 100 returns a response message may be set as appropriate.

Thereafter, notification system 100 causes first notification equipment 2A present in Mr. B's room to output notification information that designates "Mr. B" as the receiver of the notification information at around 17:00. Here, first notification equipment 2A outputs a voice message saying "There is a message from Ms. A to Mr. B. Can you cook rice please?" at around 17:00. Then, Mr. B who heard the voice message output from first notification equipment 2A is able to determine that he should cook rice now.

### [Variations]

As described above, one embodiment of the present disclosure has been described by way of example of the technique disclosed in the present application. However, the technique according to the present disclosure is not limited to this embodiment and is also applicable to other embodiments obtained by appropriate modifications, replacements, addition, and omission. It is also possible derive new embodiments from any combination of constituent elements described above in the embodiment.

In view of this, variations of the embodiment will be described hereinafter.

In the above-described embodiment, in the case where the condition extracted by extractor 12 fails to satisfy a condition necessary for notification equipment 2 to output the notification information, processing unit 13 may output inquiry information to information processing terminal 3, the inquiry information indicating an inquiry about the condition not satisfied. Then, when acquirer 11 has acquired answer information indicating an answer to the inquiry information from information processing terminal 3, processing unit 13 may cause notification equipment 2 to output notification information in accordance with answer information and under the condition extracted by extractor 12.

FIG. 7 is a flowchart showing an example of operations performed by notification system 100 according to a variation of the embodiment. For example, when user U2 has input message M1 addressed to server 1 (notification system 100) via an instant messaging application through information processing terminal 3, information processing terminal 3 transmits text information including message M1 to instant messaging server 4 via a network. Upon receiving this text information, instant messaging server 4 transmits the text information to server 1 via the network. In this way, acquirer 11 acquires the text information transmitted via the network from information processing terminal 3 via instant messaging server 4 (S21).

Next, extractor 12 extracts a condition concerning notification using message M1, from the text information acquired by acquirer 11 (S22). Here, extractor 12 may extract, as the condition, tag T1 included in message M1 in accordance with, for example, the first extraction example. Alternatively, extractor 12 may conduct syntax analysis on message M1 and acquire a condition from the result of the syntax analysis in accordance with, for example, the second extraction example.

Here, if the condition extracted by extractor 12 satisfies a condition necessary for notification equipment 2 to output notification information (No in S23), processing unit 13 outputs an instruction signal including an instruction, i.e., an instruction, to notification equipment 2 via the network under the condition extracted by extractor 12 (S24). Notification equipment 2 that has received the instruction signal outputs notification information in accordance with the instruction included in the instruction signal.

If the condition extracted by extractor 12 fails to satisfy the condition necessary for notification equipment 2 to output notification information, i.e., if there is any condition not satisfied (Yes in S23), processing unit 13 transmits (outputs) inquiry information indicating an inquiry about the condition not satisfied to information processing terminal 3 via the network (S25).

Information processing terminal 3 that has received the inquiry information displays a message indicating the inquiry via the instant messaging application. Then, user U2 inputs an answer to the inquiry via the instant messaging application through information processing terminal 3. Then, information processing terminal 3 transmits answer information indicating the answer to the inquiry information to server 1 via the network. In this way, acquirer 11 acquires the answer information via the network (S26).

Then, when the condition necessary for notification equipment 2 to output the notification information is satisfied by the answer included in the answer information acquired by acquirer 11 (No in S23), processing unit 13 transmits an instruction signal including an instruction to notification equipment 2 via the network, i.e., outputs an instruction, under the conduction extracted by extractor 12 and the answer included in the answer information acquired by acquirer 11 (i.e., the condition not satisfied) (S24).

On the other hand, if the answer included in the answer information acquired by acquirer 11 still fails to satisfy the condition required for notification equipment 2 to output the notification information (Yes in S23), processing unit 13 executes steps S25 and S26 again. This processing is repeated until the above condition is satisfied.

Notification equipment 2 that has received the instruction signal outputs notification information in accordance with the instruction included in the instruction signal. In this way, notification system 100 according to the present variation is capable of satisfying the condition necessary for notification equipment 2 to output the notification information by making an inquiry about the condition not satisfied. Thus, notification system 100 has the advantage of allowing notification equipment 2 to easily out the notification information in an appropriate mode of notification.

FIG. 8 is a diagram showing a specific example of operations performed by notification system 100 according to the variation of the embodiment. In the example shown in FIG. 8, processing unit 13 of notification system 100 determines that the condition necessary for notification equipment 2 to output the notification information is satisfied when extractor 12 has extracted three conditions including a condition indicating the timing of output of the notification information (notification timing), a condition indicating the receiver of the notification information, and a condition indicating the type of notification equipment 2 that outputs the notification information.

In FIG. 8, (a) shows message M1 (in the present example, "father, Bring in the laundry just at 18:00.) that is input by user U2, i.e., the user's mother, via the instant messaging application by using information processing terminal 3.

In FIG. 8, (b) shows data that notification system 100 has extracted from text information including message M1 shown in (a) in FIG. 8. Here, extractor 12 of notification system 100 extracts a condition indicating that the notification timing is at about 18:00. (e.g., at 17:50) and a condition indicating that the receiver of the notification information is the user's father. Meanwhile, extractor 12 does not extract a condition indicating notification equipment 2 that outputs the notification information. Thus, processing unit 13 transmits (outputs) inquiry information indicating an inquiry about notification equipment 2 that outputs the notification information, to information processing terminal 3 via the network.

In FIG. 8, (c) shows a message (in the present example, a message saying "which notification equipment do you select?") indicating an inquiry from notification system 100 displayed via the instant messaging application and a message (in the present example, a message saying "robot cleaner") that indicates the answer inputted by user U2, i.e., the user's mother. Information processing terminal 3 transmits answer information indicating an answer to server 1(notification system 100) via the network.

In FIG. 8, (d) shows data that notification system 100 has extracted from the text information including message M1 shown in (a) in FIG. 8 and the data that notification information 100 has acquired from information processing terminal 3. As shown in (d) in FIG. 8, the condition that indicates notification equipment 2 that outputs lacking notification information is satisfied. Thus, processing unit 13 causes the robot cleaner serving as notification equipment 2 to output notification information at about 18:00, the notification information designating the user's father as the receiver of the notification information.

Note that (e) in FIG. 8 shows a response message received from notification system 100 and displayed in the instant messaging application. The response message is a message indicating that the notification information is output from notification equipment 2 under the satisfied condition (in the present example, a message saying "The message to Dad is coming from the robot cleaner at 17:50").

In the above-described embodiment, acquirer 11 of notification system 100 acquires the text information by receiving a signal that includes message M1 transmitted from information processing terminal 3 via the network by way of instant messaging server 4, but the present disclosure is not limited to this. For example, acquirer 11 may acquire the text information by receiving a signal that includes message M1 transmitted from information processing terminal 3 by way of another server different from instant messaging server 4. The number of servers by way of which the aforementioned signal is transmitted from information processing terminal 3 to acquirer 11 of notification system 100 may be one or two or more. For example, as shown in FIG. 9, acquirer 11 may acquire the text information by receiving a signal that includes message M1 transmitted directly from information processing terminal 3 without being transmitted by way of any server. FIG. 9 is a block diagram showing an overall configuration including notification system 100 according to another variation of the embodiment.

In the above-described embodiment, acquirer 11 of notification system 100 acquires the text information including message M1 that has been input via the instant messaging application executed by information processing terminal 3, but the present disclosure is not limited to this. For example, acquirer 11 may acquire the text information including message M1 that has been input via a short message service (SNS) application executed by information processing terminal 3. As another alternative, for example, acquirer 11 may acquire the text information including message M1 that has been input via an application having a chat function that conforms to the instant messaging application executed by information processing terminal 3.

In the above-described embodiment, notification system 100 may be realized by any device other than server 1. For example, although notification system 100 according to the above-described embodiment is realized by a single device, it may be realized by a plurality of devices. In the case where notification system 100 is realized by a plurality of devices, constituent elements of notification system 100 may be divided in any way among these devices. For example, some of the constituent elements of notification system 100 according to the above-described embodiment may be provided in a facility where user U1 lives. That is, the present disclosure may be implemented by cloud computing, or may be implemented by edge computing.

Moreover, for example, in the above-described embodiment, all or some of the constituent elements of notification system 100 according to the present disclosure may be configured as dedicated hardware, or may be realized by executing software programs suitable for each constituent element. Each constituent element may be realized by a program executor such as a central processing unit (CPU) or a processor reading out and executing a software program stored in a recording medium such as a hard disk drive (HDD) or semiconductor memory.

The constituent elements of notification system 100 according to the present disclosure may be configured as one or a plurality of electronic circuits. Each electronic circuit may be a general-purpose circuit, or may be a dedicated circuit.

Examples of the one or multiple electronic circuits may include semiconductor devices, integrated circuits (ICs), and large-scale Integrated (LSI) circuits. ICs or LSI circuits may be integrated on a single chip, or may be integrated on a plurality of chips. ICs and LSI circuits as used herein may be called by different names depending on the degree of integration, and may be called as system LSI circuits, very large scale integrated (VLSI) circuits, or ultra large scale integrated (ULSI) circuits. Field programmable gate arrays (FPGAs) programmed after the manufacture of LSI circuits are also usable for the same purpose.

These general and specific aspects of the present disclosure may be realized as a system, a device, a method, an integrated circuit, or a computer program. Alternatively, they may also be realized as an optical disk or an HDD that stores the computer program or as a non-transitory computer-readable recording medium such as semiconductor memory. For example, the present disclosure may be realized as a program for causing a computer to execute the notification method according to the above-described embodiment. This program may be recorded on a non-transitory computer-readable recording medium such as a CD-ROM, or may be distributed via a communication channel such as the Internet.

As described above, one embodiment of the present disclosure has been described by way of example of the technique disclosed in the present application. The attached drawings and detailed description are provided in order to describe the embodiment.

Thus, the constituent elements shown in the drawings or described in the detailed description may include not only essential constituent elements that are necessary to solve the problems, but also constituent elements that are not essential to solve the problem and that are merely given to describe the above technique. Therefore, even if such non-essential constituent elements are shown in the attached drawings or described in the detailed description, they should not immediately be regarded as being essential.

Since the above-described embodiment is a mere illustrative example of the technique according to the present disclosure, for example, various modifications, replacement, addition, or omission are possible within the scope of claims or within an equivalent range of the claims.

### [Summary]

As described above, notification system 100 according to a first aspect includes acquirer 11, extractor 12, and processing unit 13. Acquirer 11 acquires text information that includes message M1 transmitted from information processing terminal 3. Extractor 12 extracts a condition concerning notification using message M1 from the text information acquired by acquirer 11. Processing unit 13 causes notification equipment 2 to output notification information under the condition extracted by extractor 12, the notification information indicating a content of message M1 included in the text information.

In this way, if message M1 is created to include the condition, information processing terminal 3 becomes capable of designating the mode of notification of the notification information. This brings about the advantage of allowing information processing terminal 3 to control the notification from notification equipment 2 with ease.

In notification system 100 according to a second aspect, in the first aspect, acquirer 11 acquires the text information including message M1 that is input via an instant messaging application executed by information processing terminal 3. Extractor 12 extracts, as the condition, tag T1 included in message M1.

This makes it clear that tag T1 is a character string that indicates the condition in message M1 and accordingly brings about the advantage of facilitating the extraction of the condition from the text information.

In notification system 100 according to a third aspect, in the first or second aspect, acquirer 11 acquires the text information including message M1 that is input via an instant messaging application executed by information processing terminal 3. Extractor 12 parses message M1 and extracts the condition from a result of parsing.

Because extractor 12 extracts the condition automatically from message M1, there is no need for user 2 to input specific data such as tag 1. This brings about the advantage of facilitating an improvement in convenience.

In notification system 100 according to a fourth aspect, in any one of the first to third aspects, the condition indicates timing of output of the notification information from notification equipment 2.

This allows information processing terminal 3 to designate the timing of output of the notification information from notification equipment 2 and accordingly brings about the advantage of allowing notification equipment 2 to output the notification information with timing desired by user U2.

In notification system 100 according to a fifth aspect, in any one of the first to fourth aspects, the condition indicates the type of notification equipment 2 that outputs the notification information.

This allows information processing terminal 3 to designate the type of notification equipment 2 that outputs the notification information and accordingly brings about the advantage of allowing notification equipment 2 desired by user U2 to output the notification information.

In notification system 100 according to a sixth aspect, in any one of the first to fifth aspects, the condition indicates a receiver of the notification information.

This allows information processing terminal 3 to designate the receiver of the notification information and accordingly brings about the advantage of facilitating the transmission of the notification information to the receiver desired by user U2.

In notification system 100 according to a seventh aspect, in the sixth aspect, processing unit 13 causes notification equipment 2 relating to the receiver to output the notification information.

This allows not unspecified notification equipment but notification equipment 2 relating to the designated receiver to output the notification information and accordingly brings about the advantage of facilitating the transmission of the notification information to the designated receiver.

In notification system 100 according to an eighth aspect, in the sixth or seventh aspect, processing unit 13 causes notification equipment 2 to output the notification information in accordance with a parameter set by the receiver.

This allows notification equipment 2 to output the notification information in the mode of notification set by the designated receiver and accordingly brings about the advantage of facilitating the transmission of the notification information to the designated speaker.

In notification system 100 according to a ninth aspect, in any one of the first to eighth aspects, the condition indicates a mode of output of the notification information.

This allows information processing terminal 3 to designate the mode of output of the notification information and accordingly brings about the advantage of allowing notification equipment 2 to output the notification information in the mode of notification desired user U2.

In notification system 100 according to a tenth aspect, in any one of the first to ninth aspects, when the condition extracted by extractor 12 fails to satisfy a condition necessary for notification equipment 2 to output the notification information, processing unit 13 outputs inquiry information to information processing terminal 3, the inquiry information indicating the condition not satisfied. When acquirer 11 has acquired, from information processing terminal 3, answer information that indicates an answer to the inquiry information, processing unit 13 causes notification equipment 2 to output the notification information in accordance with the answer information and under the condition extracted by extractor 12.

By making an inquiry about the condition not satisfied, it is possible to satisfy a condition necessary for notification equipment 2 to output the notification information. This brings about the advantage of allowing notification equipment 2 to output the notification information in an appropriate mode of notification with ease.

Notification equipment 2 according to an eleventh aspect includes instruction acquirer 21 and outputter 22. Instruction acquirer 21 acquires an instruction to output notification information from notification system 100 according to any one of the first to tenth aspects. When instruction acquirer 21 has acquired the instruction, outputter 22 outputs the notification information.

In this way, if message M1 is created to include the condition, information processing terminal 3 becomes capable of designating the mode of notification in which the notification information is output. This brings about the advantage of allowing information processing terminal 3 to control the notification from notification equipment 2 with ease.

A notification method according to a twelfth aspect includes acquiring text information that includes message M1 transmitted from information processing terminal 3 (S11). This notification method further includes extracting a condition concerning notification using message M1 from the acquired text information (S12). The notification method further includes causing notification equipment 2 to output notification information under the extracted condition, the notification information indicating a content of message M1 included in the text information (S13).

In this way, if message M1 is created o include the condition, information processing terminal 3 becomes capable of designating the mode of notification in which the notification information is output. This brings about the advantage of allowing information processing terminal 3 to control the notification from notification equipment 2 with ease.

A program according to a thirteenth aspect causes one or more processors to execute the notification method according to the twelfth aspect.

In this way, if message M1 is created to include the condition, information processing terminal 3 becomes capable of designating the mode of notification in which the notification information is output. This brings about the advantage of allowing information processing terminal 3 to control the notification from notification equipment 2 with ease.

### [Industrial Applicability]

The present disclosure is applicable to a system or the like that causes notification equipment to output notification information indicating the contents of a message transmitted from an information processing terminal.

### [Reference Signs List]

- 1: server
- 11: acquirer
- 12: extractor
- 13: processing unit
- 14: storage
- 2: notification equipment
- 21: instruction acquirer
- 22: outputter
- 2A: first notification equipment
- 2B: second notification equipment
- 3: information processing terminal
- 4: instant messaging server
- 100: notification system
- 200: notification system according to comparative example
- M1: message
- M10: main body of message
- T1: tag
- T11: first tag
- T12: second tag
- U1, U11, U12, U2: user
- W1: keyword
- W11: first keyword
- W12: second keyword

## Claims

1. A notification system comprising:
an acquirer that acquires text information that includes a message transmitted from an information processing terminal;
an extractor that extracts a condition from the text information acquired by the acquirer, the condition concerning notification using the message; and
a processing unit that causes notification equipment to output notification information under the condition extracted by the extractor, the notification information indicating a content of the message included in the text information.

2. The notification system according to claim 1,
wherein the acquirer acquires the text information including the message that is input via an instant messaging application executed by the information processing terminal, and
the extractor extracts, as the condition, a tag included in the message.

3. The notification system according to claim 1,
wherein the acquirer acquires the text information including the message that is input via an instant messaging application executed by the information processing terminal, and
the extractor parses the message and extracts the condition from a result of parsing.

4. The notification system according to any one of claims 1 to 3,
wherein the condition indicates timing of output of the notification information from the notification equipment.

5. The notification system according to any one of claims 1 to 3,
wherein the condition indicates a type of the notification equipment that outputs the notification information.

6. The notification system according to any one of claims 1 to 3,
wherein the condition indicates a receiver of the notification information.

7. The notification system according to claim 6,
wherein the processing unit causes the notification equipment relating to the receiver to output the notification information.

8. The notification system according to claim 6,
wherein the processing unit causes the notification equipment to output the notification information in accordance with a parameter set by the receiver.

9. The notification system according to any one of claims 1 to 3,
wherein the condition indicates a mode of output of the notification information.

10. The notification system according to any one of claims 1 to 3,
wherein, when the condition extracted by the extractor does not satisfy a condition necessary for the notification equipment to output the notification information, the processing unit outputs inquiry information to the information processing terminal, the inquiry information indicating an inquiry about the condition not satisfied, and
when the acquirer has acquired, from the information processing terminal, answer information that indicates an answer to the inquiry information, the processing unit causes the notification equipment to output the notification information in accordance with the answer information and under the condition extracted by the extractor.

11. Notification equipment comprising:
an instruction acquirer that acquires, from the notification system according to any one of claims 1 to 3, an instruction to output the notification information; and
an outputter that outputs the notification information when the instruction acquirer acquires the instruction.

12. A notification method comprising:
acquiring text information that includes a message transmitted from an information processing terminal;
extracting a condition concerning notification using the message from the text information acquired; and
causing notification equipment to output notification information under the condition extracted, the notification information indicating a content of the message included in the text information.

13. A program for causing one or more processors to execute the notification method according to claim 12.
